# EUROPÄISCHE PATENTSCHRIFT

(11) **EP 3 977 603 B1**
(45) Veröffentlichungstag und Bekanntmachung des Hinweises auf die Patenterteilung: **12.07.2023**
(21) Anmeldenummer: 20725655.3
(22) Anmeldetag: 05.05.2020
(51) Int. Cl.: H02K 15/00, H02K 3/50, H02K 3/38

(54) **STATOR FÜR EINE ELEKTROMASCHINE SOWIE VERFAHREN ZUR HERSTELLUNG EINES SOLCHEN STATORS**
STATOR FOR AN ELECTRIC MACHINE AND METHOD FOR PRODUCING A STATOR OF THIS TYPE
STATOR POUR UNE MACHINE ÉLECTRIQUE AINSI QUE PROCÉDÉ DE FABRICATION D'UN TEL STATOR

(30) Priorität: 29.05.2019 DE 102019207889
(43) Veröffentlichungstag der Anmeldung: 06.04.2022
(73) Patentinhaber: Audi AG, 85045 Ingolstadt (DE)
(72) Erfinder: HERRMANN, Patrick, 85276 Pfaffenhofen a.d. Ilm (DE); WESTERMAIER, Christian, 85229 Markt Indersdorf (DE); BIER, Alexander, 85080 Gaimersheim (DE); ANDRASCHKO, Stephan, 86676 Ehekirchen - Schönesberg (DE)
(86) Internationale Anmeldenummer: PCT/EP2020/062378
(87) Internationale Veröffentlichungsnummer: WO 2020/239368

(56) Entgegenhaltungen:
- EP-A1- 3 079 234
- EP-A1- 3 193 428
- WO-A1-2019/073724
- JP-A- 2007 312 549
- US-A1- 2019 068 021

## Beschreibung

Die Erfindung betrifft einen Stator für eine Elektromaschine nach dem Oberbegriff des Anspruches 1 sowie ein Verfahren zur Herstellung eines solchen Stators nach dem Anspruch 11.

Bei einer Prozessabfolge zur Herstellung eines Elektromaschinen-Stators wird unter anderem zunächst eine Nutgrundisolierung in die Axialnuten des Stator-Blechpakets gelegt. Unter Anwendung der Hairpin-Technologie werden in einem folgenden Fügeprozessschritt die Hairpins in einer, in der Stator-Axialrichtung ausgerichteten Fügerichtung in die Stator-Axialnuten eingeschoben. Anschließend erfolgt ein Biegeprozessschritt, bei dem die aus dem Stator-Blechpaket ragenden Stabenden der Hairpins um einen Verschränkungswinkel in Kontaktpositionen gebogen werden, in denen die Stabenden in einem darauffolgenden Verschaltungs-Prozessschritt elektrisch verschaltet werden. Anschließend erfolgt ein Imprägnierprozessschritt, bei dem Hairpins, die Axialnuten und/oder ein Wickelkopf mit einer flüssigen Harz-Ausgangskomponente imprägniert werden und diese dann ausgehärtet wird. Aus der DE 10 2018 103 100 A1 ist ein Verfahren und eine Vorrichtung zum Positionieren und Spannen von Drahtenden für elektrische Maschinen bekannt. Aus der DE 10 2018 114 780 A1 ist ein Vorstecknest sowie ein Verfahren zur Bildung eines Kranzes aus einer Vielzahl von U-förmigen, elektrisch leitfähigen Hairpins bekannt. Aus der EP 2 684 283 B1 ist eine Vorrichtung zum Ausrichten der Leiter von Spulenelementen in einer Elektromaschine bekannt. Aus der WO 2015/087128 A2 ist ein weiterer Stator für eine Elektromaschine bekannt.

Aus die EP 3 079 234 A1, US 2019/068021 A1, EP 3 193 428 A1, JP 2007 312549 A, WO 2019/073724 A1 ist ein Verfahren und eine Vorrichtung zum Positionieren und Biegen von Drahtenden für elektrische Maschinen bekannt.

Die Aufgabe der Erfindung besteht darin, einen Stator für eine Elektromaschine sowie ein Verfahren zur Herstellung eines solchen Stators bereitzustellen, bei dem der Stator im Vergleich zum Stand der Technik prozesssicherer herstellbar ist.

Die Aufgabe ist durch die Merkmale des Anspruches 1 oder des Anspruches 11. gelöst. Bevorzugte Weiterbildungen der Erfindung sind in den Unteransprüchen offenbart.

Gemäß dem kennzeichnenden Teil des Anspruches 1 wird im Biegeprozessschritt eine Biegehilfe bereitgestellt, die einen prozesssicheren Biegevorgang der von einer axialen Stator-Stirnseite abragenden Stabenden ermöglicht. Die Biegehilfe ist eine Scheibe mit Durchlassöffnungen, durch die die Stabenden geführt sind. Die Biegehilfe-Scheibe ist unmittelbar an der axialen Stirnseite des Stators angeordnet. Deren Durchlassöffnungen sind jeweils in axialer Flucht zu den Stator-Axialnuten ausgerichtet. Ein Öffnungsrand der jeweiligen Scheiben-Durchlassöffnung wirkt beim Biegevorgang als eine Biegekante, um die das jeweilige Stabende im Biegeprozessschritt prozesssicher bis in seine Kontaktposition biegbar ist, in der die Stabenden elektrisch verschaltet werden können.

Die erfindungsgemäße Biegehilfe-Scheibe verbleibt nach dem Stator-Zusammenbau im Stator und übernimmt weitere Aufgaben (zum Beispiel Ölführung, Isolation, axiales Verspannen des Stators). Beim Verschränkungsvorgang werden durch die Drähte Kräfte auf die Biegehilfe-Scheibe eingebracht, die eine axiale (gewünscht) und eine tangentiale (unerwünscht) Komponente besitzen. Die tangentialen Kräfte können ein Verdrehen der Biegehilfe-Scheibe bewirken, was zu einem fehlerhaften Bauteil führen kann. Um ein Verdrehen zu verhindern, muss die Scheibe anlagenseitig beim Verschränkungsprozess fixiert werden. Die Fixierung muss so geartet sein, dass ein radiales Verdrehen der Biegehilfe-Scheibe zwar verhindert wird, eine axiale Bewegung jedoch möglich wird. Grund dafür ist, dass das Blechpaket zum einen eine Höhentoleranz von bis zu 1mm aufweisen kann, und zum anderen durch die axiale Krafteinwirkung beim Verschränken (bzw. Twisten) der gewünschte Effekt des axialen Verpressens des Stators auftritt. Ein solches Verspannen kann weitere 1-2mm im axialen Maß ausmachen. Das bedeutet, die entsprechende Aufnahme muss einen axialen Versatz erlauben. Hintergrund dafür ist, dass zwischen Scheibe und Blechpaket kein Spalt verbleiben darf.

In einer ersten Ausführungsvariante besteht die Möglichkeit, durch entsprechend geartete Finger über Langlöcher in die Biegehilfe-Scheibe einzutauchen und sie damit zu fixieren. Nachteilig erweist sich bei dieser Methode, dass Toleranzen eine aufwendigere Dimensionierung und Positionierung der Scheibe und der Finger nötig machen, um diese zu Positionierung. Den Effekt reduzieren könnten zum Beispiel konisch geformte Finger bzw. Löcher.

Eine zweite Ausführungsvariante zur Fixierung der Biegehilfe-Scheibe betrifft ein "Zahnrad"-Konzept. Hier ist eine Anzahl an Zähnen oder Aussparungen an der Scheibe, an die mit entsprechend geformten Gegenfingern gefahren wird. Vorteilig erweist sich dabei, dass durch eine entsprechende Formung der Finger komplett zugestellt werden kann, sodass keine toleranzabhängigen Spalte bei der Fixierung verbleiben. Weiterhin wäre hier ein axiales Vorverpressen der Scheibe durch leichte Adaptionen einfach denkbar.

Je nach Anzahl der benötigten Zähne kann auch ein gabelförmiges Werkzeug in der Anlage oder im Werkstückträger zugestellt werden. Dies erlaubt es, auch bei einer hohen Anzahl an Zähnen eine geringe Anzahl an beweglichen Teilen in der Anlage zu benötigen.

Sollte ein axiales Verspannen notwendig sein, besteht die Möglichkeit, statt radial zustellenden Fingern auch einen Verspannring axial zuzustellen. Der Verspannring fixiert zum einen die Positionierung relativ zur Nut. Andererseits übt der Verspannring einen axialen Druck auf die Biegehilfe-Scheibe aus. Dadurch wird das Blechpaket zusammengepresst. Die kann bei einer "nasslaufenden" Maschine, also einer flüssigkeitsgekühlten Maschine, notwendig sein, um den Eintritt vom Kühlmedium zwischen die einzelnen Bleche des Blechpakets zu verhindern. In einer Ausführungsform kann eine Ausprägung der Scheibe mit dem Zahnrad-Konzept realisiert sein. Der Verspannrings kann axial auf die Biegehilfe-Scheibe aufgesetzt und verbleibt dort, um die Positionierung zu gewährleisten. Es sind wieder konische Formen der Zähne / der Aussparungen denkbar, um ein Aufsetzen zu vereinfachen (Toleranzen). Die Aussparungen in der Biegehilfe-Scheibe sind nicht durchgängig, um ein Aufsetzen des Verspannringes auf dem Stator zu verhindern - es soll die axiale Verpress-Kraft auf die Biegehilfe-Scheibe eingebracht werden. Der Verspannring kann über eine Standard-NC-Achse zugeführt, auf Kraft zugestellt und wieder entfernt werden. Alternativ sind auch Konzepte denkbar, die die Biegehilfe-Scheibe zusammen mit einem Werkstückträger verbinden. Eine weitere Möglichkeit besteht darin, über ein L-Element den Verspannring auf der Biegehilfe-Scheibe zu fixieren. Der von unten gefügte Hairpin-Korb erfährt anschließend die axiale Kraft, und die gewünschte axiale Verpressung findet statt.

Alternativ ist auch denkbar, dass der Hairpin-Korb auf Zug zugestellt wird (von unten), und dann diese Position relativ zum Werkzeugträger fixiert wird (durchgängige Fügehilfe, in der Abbildung der untere graue Balken). Anschließend werden die L-Elemente axial auf dem Werkzeugträger verschraubt. Über ein Drehmoment kann eine Presskraft eingestellt werden, um die Biegehilfe-Scheibe zu verspannen.

Eine mögliche Ausprägung dieser Verschraubung zeigen die beiden folgenden Abbildungen. Am Umfang der Biegehilfe-Scheibe sind mehrere Fingerwerkzeuge verteilt, die in die zahnradförmige Biegehilfe-Scheibe greifen. Über das sequentielle Anschrauben der Finger über mehrerer Umläufe hinweg kann zum einen die Scheibe auf dem Stator positioniert werden (entsprechende Trapezform des Zahnrads/der Finger ist vorgesehen) als auch ein axiales Verpressen des Stator durch die Scheibe erreicht werden.

Eine weitere Ausführungsvarainte betrifft eine Fixierung der Biegehilfe-Scheibe direkt auf dem Stator selbst. Dazu werden an den Stirnseiten des Stators Löcher eingebracht. Die Biegehilfe-Scheibe besitzt entsprechende Pins, sodass diese auf dem Stator fixiert werden kann. Die Pins können als Tannenbaum ausgeführt sein. Falls es unterschiedliche Varianten der Scheibe (zum Beispiel unterschiedliche Motorentypen, unterschiedliche Scheiben pro Seite eines Stators) gibt, lassen sich die Pins gemäß dem Poka-Yoke-Prinzip so anordnen, dass ein fehlerhafter Zusammenbau ausgeschlossen ist.

Neben der Fixierung der Biegehilfe-Scheibe selbst sind die folgenden weiteren Aspekte bei der Statormontage mit der Biegehilfe-Scheibe zu beachten. So können auf der Scheibenunterseite Einführhilfen denkbar sein, die ein leichteres Aufsetzen der Biegehilfe-Scheibe ermöglichen, wenn die Nutgrundisolation bereits gesetzt ist (diese steht aus Isolationsgründen einige Millimeter aus dem Blechpaket heraus). Ebenso erleichtert sich dadurch auch das Montieren der Nutgrundisolation, wenn die Biegehilfe-Scheibe bereits montiert ist. Diese beiden Montageprozesse können getauscht werden.

Eine weitere Herausforderung bei der Montage der Biegehilfe-Scheibe ist das Halten der Nutgrundisolation mit einer Spannscheibe. Beim Stand der Technik ohne Spannscheibe werden Kragenstützfinger (ähnlich der oben abgebildeten Finger) zugestellt, die ein herausrutschen des Isolationspapiers durch den Einfahrenden Hairpin-Korb verhindern. Ist eine Scheibe montiert, ist dies nicht mehr möglich. Eine Idee, die Positionierung der Nutgrundisolation zu fixieren, ist ein zahnradförmiger Stempel, der axial auf dem Blechpaket aufgesteckt wird, und exakt so viele Zähne besitzt, wie es Nuten gibt. Während der Hairpin-Korb eingefahren wird, bedeckt diese Stempel die Nuten von oben und hält damit die Isolation fest. Kurz bevor die Hairpin-Enden den Nutausgang erreicht, wird der Stempel entfernt. Durch die bereits gefügten Hairpins kann ein Verrutschen der Nutgrundisolation damit effektiv verhindert werden.

Eine der wesentlichen Aufgaben der Biegehilfe-Scheibe ist es, als Trichterfunktion für den Träufelprozess beim Imprägnieren zu dienen. Beim Imprägnieren wird ein Harz in den Stator gebracht und anschließend ausgehärtet. Das Imprägnieren eines Stators hat mehrere Aufgaben: Es soll die Isolationsstärke des Systems erhöhen, indem es die Luft im Stator verdrängt, und eventuelle Fehlstellen in der Isolation behebt, in dem es die Isolation übernimmt. Weiterhin steigt die thermische Leitfähigkeit, was Vorteile bei der Kühlung bringt (die Verlustwärme kann besser abgeführt werde), da das Harz eine höhere thermische Leitfähigkeit als Luft hat und keine Konvektion (Wärmeübergang an Luft) stattfinden muss. Nicht zuletzt steigert sich auch die mechanische Stabilität des Stators, da die Leiter und die Isolationspapiere regelrecht miteinander verklebt werden.

Für jede dieser Aufgaben ist es essentiell, möglichst viel Harz in den Stator zu bringen, und entsprechend die Luft zu verdrängen. Beim Träufeln wird das Harz durch mindestens eine Düse auf den Stator geträufelt, wie die folgende Abbildung zeigt.

Der Stator befindet sich dabei in waagrechter Position, und dreht sich (damit am Umfang gleichmäßig Harz aufgebracht wird. Durch dieses Drehen entstehen Fliehkräfte, die dazu führen, dass überschüssiges Harz radial nach außen hin abtropft. Da das Harz zähflüssig ist, wird es steht bis zu der Position rinnen, die radial gesehen am weitesten außen liegt. Eine der wesentlichen Herausforderungen beim Imprägnieren ist es, das Blechpaket frei von Verschmutzungen zu halten. Um dies zu gewährleisten, besteht die Idee darin, in die Scheibe eine Abtropfkante zu integrieren, die ein definiertes Abtropfen, ohne Stator-Verschmutzung ermöglicht. Die folgende Abbildung zeigt eine mögliche Ausprägung.

Insbesondere das "Zahnrad"-Verspannkonzept birgt einige Vorteile in der prozesssicheren Positionierung der Biegehilfe-Scheibe in der Anlage, insbesondere im Hinblick auf eine großeserientaugliche Fertigung. Mit ihr lässt sich ein genaues Positionieren der Biegehilfe-Scheibe und eine definierte axiale Vorpressung des Stators realisieren. Die Tropfkante für das Imprägnieren ist eine weitere Eigenschaft, die die Produktion eines Hairpin-Stators deutliche vereinfacht.

Nachfolgend werden Aspekte der Erfindung nochmals detailliert wiedergegeben:
Im Biegevorgang (das heißt Verschränkungsprozessschritt) üben die aus der axialen Stator-Stirnseite vorragenden Stabenden eine, in Umfangsrichtung wirkende, tangentiale Biegekraftkomponente auf die Biegehilfe-Scheibe aus. Damit die Biegehilfe-Scheibe mit Bezug auf den Stator drehfest angeordnet verbleibt, kann eine Verdrehsicherung bereitgestellt sein. Die Verdrehsicherung kann bevorzugt aus einer, an der Biegehilfe-Scheibe ausgebildeten Verdrehsicherungskontur und einer damit zusammenwirkenden Gegenkontur aufgebaut sein. Die Gegenkontur kann in einer ersten Ausführungsvariante unmittelbar am Stator ausgebildet sein. Alternativ dazu kann die Gegenkontur auch funktionell unabhängig vom Stator an einem Bearbeitungswerkzeug ausgebildet sein.

Die in den Stator-Axialnuten verlegten Wickelstäbe können jeweils Bügelschenkel eines U-förmigen Drahtbügels (Hairpin) sein, die mit einem Bügelsteg miteinander verbunden sind. Die U-förmigen Drahtbügel können im Hairpin-Fügeprozessschritt in einer axial ausgerichteten Fügerichtung in die Stator-Axialnuten eingeschoben werden. Beim Fügevorgang wird der Bügelsteg des jeweiligen Drahtbügels (Hairpin) mit einer Fügekraft bis in mittelbaren oder unmittelbaren Anschlag mit der zugewandten axialen Stator-Stirnseite gedrückt.

In einer technischen Umsetzung kann der Stator aus einem Blechpaket mit in axialer Stapelrichtung angeordneten Blechlagen aufgebaut sein. Nach erfolgtem Biegeprozessschritt kann das Blechpaket, bestehend aus lose übereinander gestapelten Blechlagen, mit einer Vorspannkraft zwischen den verschränkten Stabenden und den Bügelstegen der Drahtbügel (Hairpins) eingespannt sein, die den Wickelkopf der Stator-Wicklungen bilden.

Auf diese Weise ergibt sich ein Axialpressverband, bei dem die Biegehilfe-Scheibe, das Blechpaket und gegebenenfalls eine auf der Wickelkopf-Stirnseite des Stators positionierte zweite Scheibe zwischen den verschränkten Stabenden und den Bügelstegen der Drahtbügel eingespannt sind.

Die im Blechpaket wirkende Vorspannkraft kann zumindest teilweise während des Biegeprozessschrittes aufgebaut werden: Im Biegeprozessschritt wird durch die Verschränkung der Stabenden eine in Axialrichtung wirkende Biegekraftkomponente auf die Biegehilfe-Scheibe ausgeübt, und zwar unter zumindest teilweisem Aufbau der Blechpaket-Vorspannkraft. Gleichzeitig reduziert sich auch die Blechpaket-Axiallänge um einen Axialversatz. Im Hinblick auf eine prozesssichere Verdrehsicherung ist es von Vorteil, wenn die Verdrehsicherungskontur der Biegehilfe-Scheibe und die damit zusammenwirkende Gegenkontur um den Axialversatz zueinander leichtgängig verstellbar sind.

Im Fügeprozessschritt können die in die Stator-Axialnuten eingeschobenen Drahtbügel mit der Fügekraft sowie unter Zwischenlage des Stator-Blechpakets sowie der Biegehilfe-Scheibe gegen einen werkzeugseitigen Axialanschlag drücken. Dadurch wird das Stator-Blechpaket zumindest teilweise axial verpresst. Anschließend erfolgt der Biegeprozessschritt (das heißt Verschränkungsprozessschritt), und zwar unter Bildung des bereits erwähnten Axialpressverbands, wodurch die axiale Verpressung des Stator-Blechpakets dauerhaft aufrechterhalten bleibt.

Zumindest im Fügeprozessschritt und im Biegeprozessschritt ist dem Stator ein Werkzeugträger zugeordnet, der die Handhabung des Stators in den einzelnen Prozessschritten vereinfacht. Der Werkzeugträger weist in einer bevorzugten Ausführungsvariante an den axial gegenüberliegenden Stirnseiten des Stators jeweils zumindest einen Klemmbacken auf.

Vor Durchführung des Biegeprozessschrittes kann das Stator-Blechpaket unter zumindest teilweisem Aufbau der Blechpaket-Vorspannkraft zwischen den beiden Klemmbacken geklemmt werden. Hierzu können die beiden Klemmbacken beispielhaft durch ein Stellgewinde in Axialrichtung höhenverstellt werden, um einen Axialabstand zwischen den beiden Klemmbacken und damit die Klemmkraft einzustellen.

In einer Doppelfunktion können die Klemmbacken nicht nur das Stator-Blechpaket axial verpressen. Zusätzlich kann zumindest der auf der Seite der Stabenden angeordnete Klemmbacken die Gegenkontur aufweisen, die mit der Verdrehsicherungskontur der Biegehilfe-Scheibe zusammenwirkt. In diesem Fall ist der Klemmbacken also auch Bestandteil der erfindungsgemäßen Verdrehsicherung.

Um einen möglichst leichtgängigen, störkonturfreien Fügeprozessschritt bereitzustellen, ist es bevorzugt, wenn die jeweilige Durchlassöffnung der Biegehilfe-Scheibe und/oder der axial gegenüberliegenden zweiten Scheibe an ihrem, der Fügerichtung zugewandten Öffnungsrand konusartig ausgeweitet ist. Auf diese Weise wird eine Einführhilfe für die Wickelstäbe und/oder für eine Nutgrundisolation bereitgestellt.

Die Nutgrundisolation wird vor Durchführung des Fügeprozessschrittes in die jeweilige Axialnut des Stators lose eingelegt. Im anschließend erfolgenden Fügeprozessschritt wird der Drahtbügel mit seinen beiden Bügelschenkeln in die Stator-Axialnuten in Fügerichtung eingeschoben. Aufgrund der nur losen Positionierung der Nutgrundisolation besteht die Problematik, dass gegebenenfalls der Drahtbügel die Nutgrundisolation in der Stator-Axialnut in Fügerichtung mitnimmt. Um eine solche Mitnahme der Nutgrundisolation zu vermeiden, kann ein Sperrelement bereitgestellt sein, das an der zur Fügerichtung als Bewegungsanschlag die Verlagerung der Nutgrundisolation in Fügerichtung verhindert.

Dem Biegeprozessschritt ist ein Imprägnierprozessschritt nachgeschaltet, bei dem insbesondere die Wickelstäbe, die Stator-Axialnuten und/oder die auf einer Stator-Axialseite angeordneten Wickelköpfe mit einer flüssigen Harz-Ausgangskomponente imprägniert werden. Um ein zielgerichtetes Auftragen der flüssigen Harz-Ausgangskomponente zu ermöglichen, bietet sich ein sogenannter Träufelprozess an, bei dem mit Hilfe einer Träufeldüse die flüssige Harz-Ausgangskomponente zugeführt wird. Im Träufelprozess dreht der Stator um seine horizontal ausgerichtete Statorachse. In dieser Konstellation wird die flüssige Harz-Ausgangskomponente ausgehend von den Stabenden oder den Wickelköpfen der Drahtbügel unter Zentrifugalkraft-Einwirkung über die Biegehilfe-Scheibe bzw. die axial gegenüberliegende Scheibe radial nach außen strömt. Bevorzugt ist es, wenn die Biegehilfe-Scheibe oder die axial gegenüberliegende Scheibe eine umlaufende Abtropfkante aufweist, an der die nach radial außen strömende Harz-Ausgangskomponente abtropfen kann, ohne in Kontakt mit der Blechpaket-Stirnseite zu treten.

Nachfolgend sind Ausführungsbeispiele der Erfindung anhand der beigefügten Figuren beschrieben.

### Es zeigen:

- Figur 1a oder 1b: jeweils perspektivischen Teilschnittansichten eines fertiggestellten Stators ohne Harzvergussmasse;
- Figur 1c: ein Blockschaltdiagramm, das grob vereinfacht eine Prozessabfolge zur Herstellung des Stators andeutet;
- Figuren 2 bis 6: jeweils grob vereinfachte Darstellungen der Biegehilfe-Scheibe mitsamt Verdrehsicherung;
- Figuren 7 und 8: jeweils in Alleinstellung eine Biegehilfe-Scheibe und ein Verspannring;
- Figur 9: eine Ansicht, anhand der ein Fügeprozessschritt und ein anschließender Biegeprozessschritt veranschaulicht wird;
- Figur 10: eine Ansicht entsprechend der Figur 9 gemäß einer weiteren Ausführungsvariante;
- Figuren 11 und 12: jeweils perspektivische Teilansichten, in denen der Stator in einem Werkzeugträger angeordnet ist;
- Figur 13: eine Ansicht, in der die Biegehilfe-Scheibe über eine Verdrehsicherung drehfest am Stator angebunden ist;
- Figur 14: eine Detailansicht einer Durchlassöffnung der Biegehilfe-Scheibe;
- Figur 15: ein Sperrelement; und
- Figur 16: eine Teilansicht des Stators, anhand der ein im Imprägnierprozessschritt veranschaulicht ist.

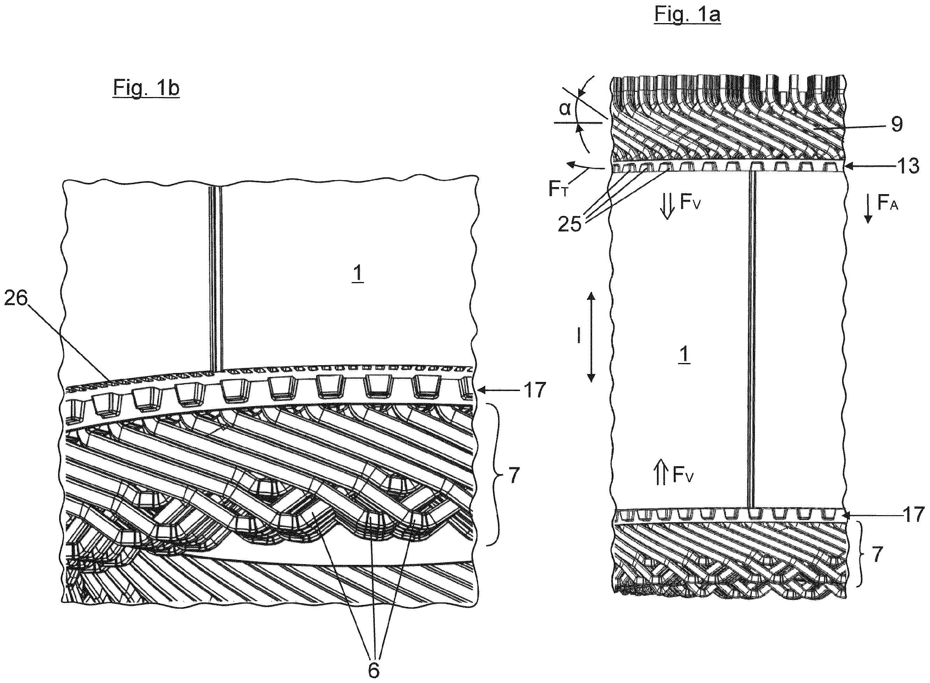

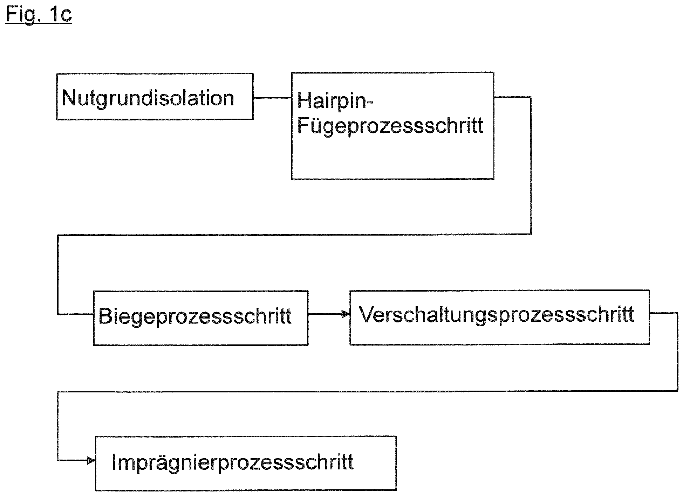

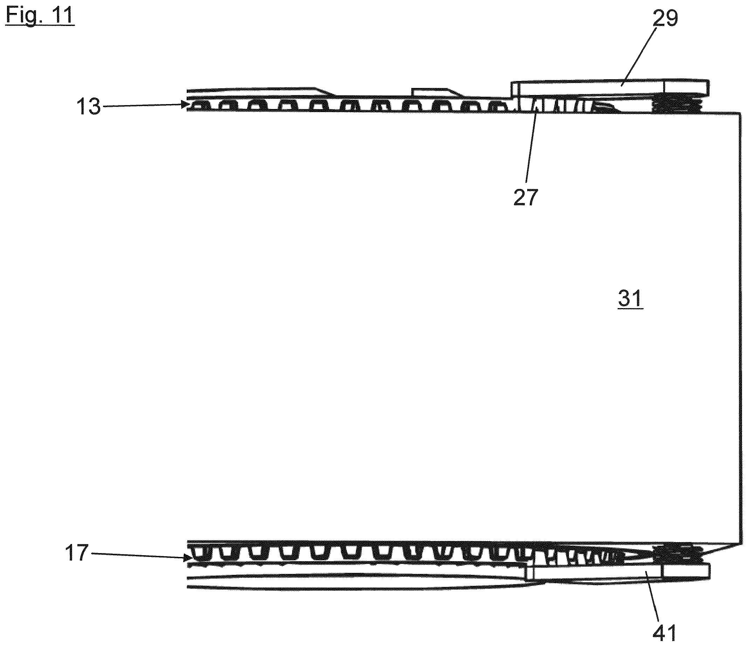

In der Figur 1 ist ein fertig gestellter Stator ohne Imprägnierung gezeigt. Der Stator ist aus einem Blechpaket 1 mit in axialer Stapelrichtung übereinander angeordneten Blechlagen aufgebaut. Das Blechpaket 1 weist radial innen eine Vielzahl von Axialnuten 3 (Figur 11) auf, in denen U-förmige Hairpins 6 als elektrische Leiter eingelegt sind. Jeder der Hairpins 6 ist ein U-förmiger Drahtbügel mit jeweils zwei in den Axialnuten 3 eingelegten Wickelstäben 5, die mit einem Bügelsteg 7 miteinander verbunden sind. Die Stabenden 9 der U-förmigen Drahtbügel 6 ragen von einer axialen Stator-Stirnseite 11 über eine vordefinierte Bauhöhe ab. In der Figur 1 sind die Stabenden in einem Biegeprozessschritt (das heißt Verschränkungsprozessschritt) um einen Verschränkungswinkel α (Figur 1a) in die dargestellten Kontaktpositionen gebogen, in denen die Stabenden 9 in einem Verschaltungsprozessschritt elektrisch verschaltet worden sind. Wie aus der Figur 1a oder 1b weiter hervorgeht, ist unmittelbar an der oberen axialen Stator-Stirnseite 11 eine Biegehilfe-Scheibe 13 positioniert. An der gegenüberliegenden unteren axialen Stirnseite 15 ist in der Figur 1a ebenfalls eine baugleich ausgeführte Scheibe 17 angeordnet. Die von der unteren axialen Stator-Stirnseite 15 abragenden Bügelstege 7 der U-förmigen Drahtbügel 6 bilden einen Wickelkopf.

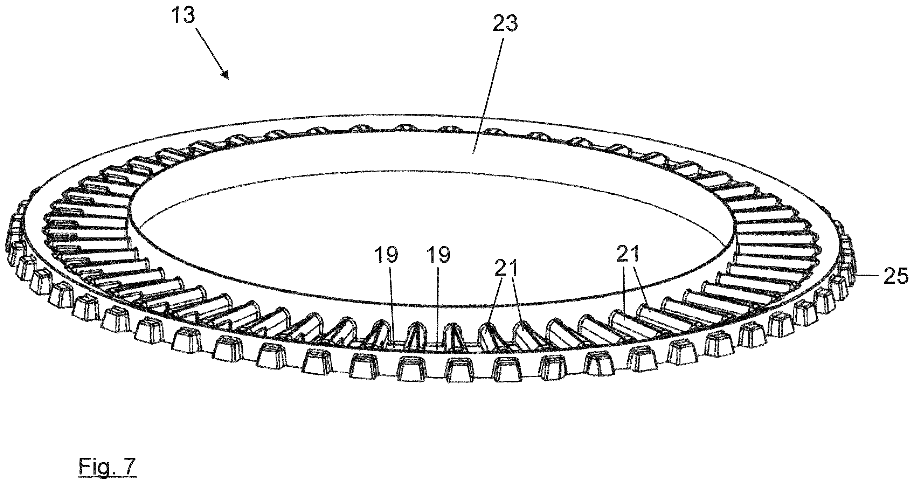

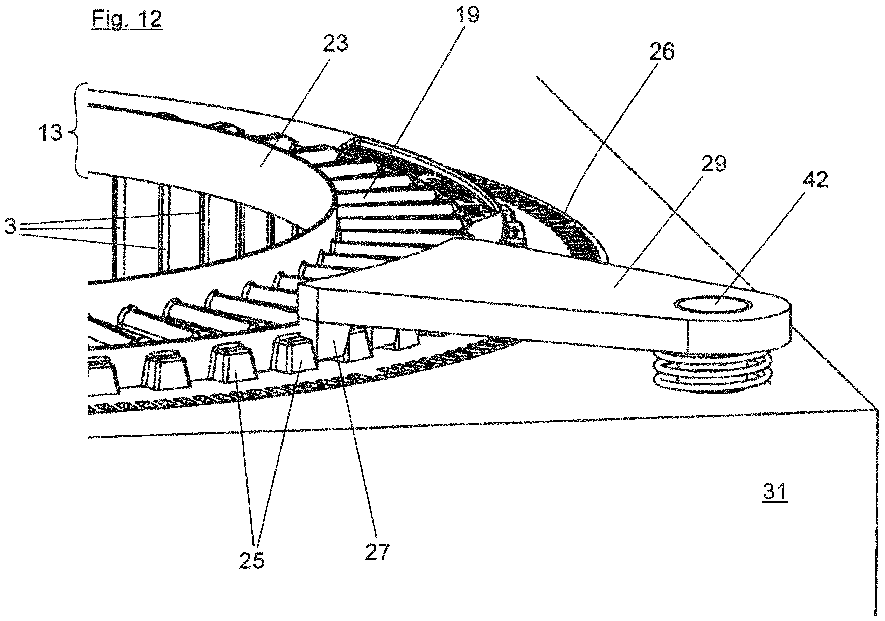

Die Biegehilfe-Scheiben 13 weist Durchlassöffnungen 19 (zum Beispiel Figur 7, 9 oder 10) auf, durch die die Wickelstäbe 5 axial nach außen geführt sind. Die Durchlassöffnungen 19 der Biegehilfe-Scheibe 13 sind jeweils in axialer Flucht zu den Axialnuten 3 (Figur 12) ausgerichtet.

Ein in der Figur 7 gezeigter Öffnungsrand 21 der jeweiligen Scheiben-Durchlassöffnung 19 wirkt als eine Biegekante, um die das jeweilige Stabende 9 im Biegeprozessschritt bis in die in den Figuren 1a oder 1b dargestellten Kontaktposition gebogen wird. Die Biegehilfe-Scheibe 13 ist in der Figur 7 in Alleinstellung dargestellt. Demzufolge weist die Biegehilfe-Scheibe 13 radial innen eine umlaufende Dichtungswand 23 sowie einen radial äußeren Zahnkranz 25 auf, der Bestandteil einer Verdrehsicherung der Biegehilfe-Scheibe 13 ist. In der Figur 1b sind radial außerhalb der Biegehilfe-Scheibe 13 Ölkanäle 26 im Blechpaket 1 ausgebildet, die in der Stator-Axialrichtung verlaufen.

Das Blechpaket 1 ist in der Figur 1a mit einer angedeuteten Vorspannkraft Fv zwischen den verschränkten Stabenden 9 und den unteren Bügelstegen 7 (das heißt Wickelkopf) der U-förmigen Drahtbügel (Hairpins) 6 eingespannt, und zwar unter Bildung eines Axialpressverbands, bei dem die Biegehilfe-Scheibe 13, das Blechpaket 1 und die axial gegenüberliegende zweite Scheibe 17 zwischen den verschränkten Stabenden 9 und dem Wickelkopf (Bügelstege 7) eingespannt sind. Auf diese Weise bleiben die durch die Blechlagen des Stator-Blechpakets 1 geführten Ölkanäle 26 fluiddicht.

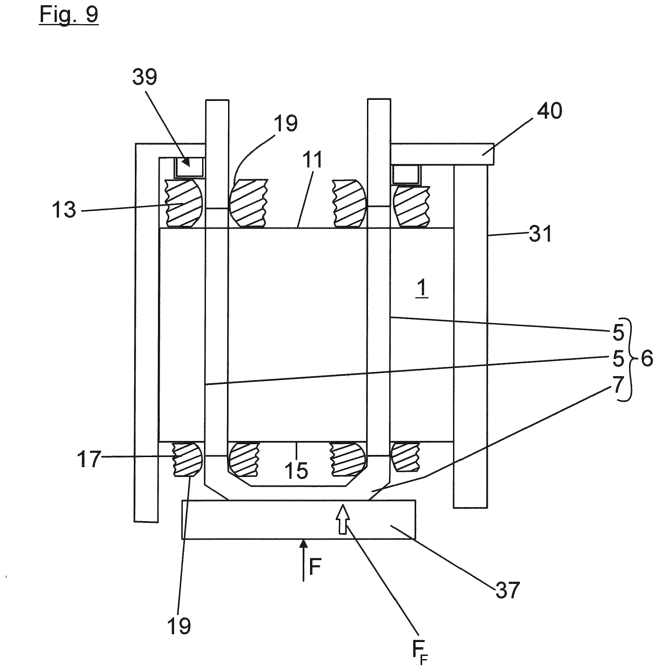

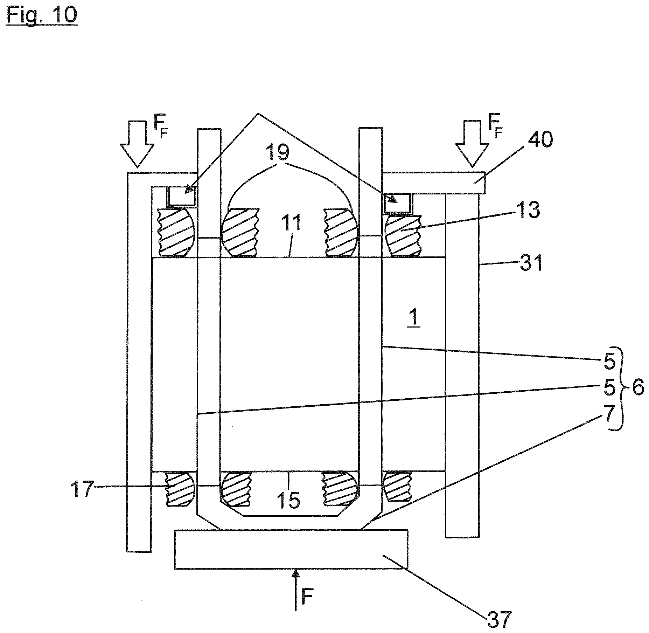

In der Figur 1c sind anhand eines grob vereinfachten Blockschaltdiagramms die für die Erfindung relevanten Prozessschritte in einer Abfolge gezeigt, wonach zunächst die Stator-Axialnuten 3 mit einer Nutgrundisolation bestückt werden. Anschließend erfolgt ein Hairpin-Fügeprozessschritt, bei dem die U-förmigen Drahtbügel 6 in einer Fügerichtung F (Figur 9 oder 10), die in Stator-Axialrichtung ausgerichtet ist, in die Axialnuten 3 eingeschoben werden. Danach erfolgt ein Biegeprozessschritt, bei dem die Stabenden 9 um den Verschränkungswinkel α in ihre Kontaktpositionen gebogen werden. In einem folgenden Verschaltungsprozessschritt werden die Stabenden 9 elektrisch verschaltet. Abschließend erfolgt ein Imprägnierprozessschritt, bei dem die Wickelköpfe, die Stabenden, die Axialnuten sowie die Wickelstäbe mit einer Harz-Vergussmasse imprägniert werden.

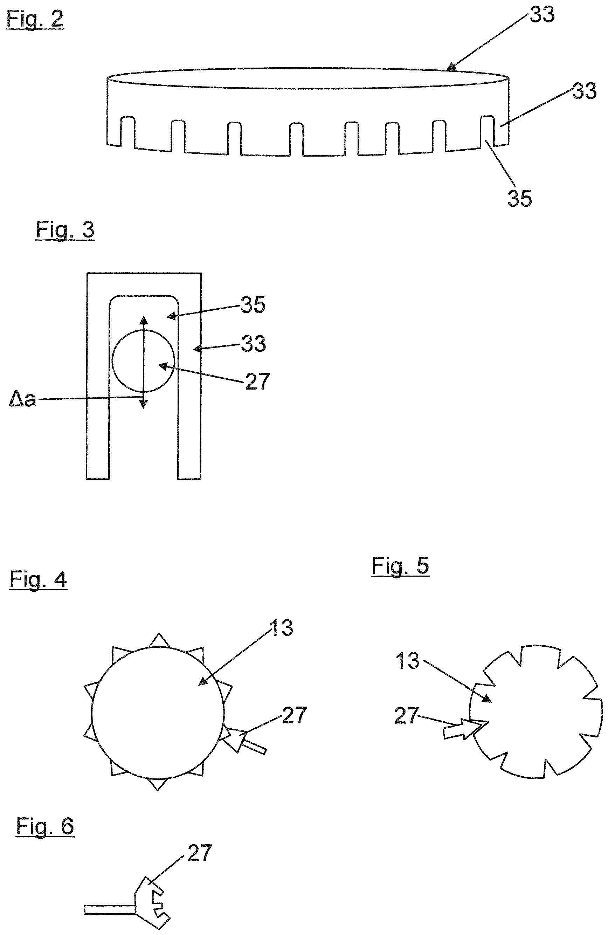

Beim Biegevorgang üben die Stabenden 9 eine in Umfangsrichtung wirkende, tangentiale Biegekraftkomponente F_{T} (Figur 1a) auf die Biegehilfe-Scheibe 13 aus. Um eine verdrehfeste Anordnung der Biegehilfe-Scheibe 13 auf dem Stator zu gewährleisten, ist eine Verdrehsicherung bereitgestellt, bei der der Scheiben-Zahnkranz 25 mit einer Gegenkontur 27 (Figur 6, 11 oder 12) zusammenwirkt. In der Figur 11 oder 12 ist die Gegenkontur 27 Bestandteil eines Klemmbackens 29 eines Werkzeugträgers 31.

Zudem wirken im Biegevorgang die Stabenden 9 in der Stator-Axialrichtung mit einer axialen Biegekraftkomponente F_{A} (Figur 1a) auf die Biegehilfe-Scheibe 13 ein, und zwar unter zumindest teilweisem Aufbau der Blechpaket-Vorspannkraft Fv sowie unter Reduzierung einer Blechpaket-Axiallänge I (Figur 1a) um einen Axialversatz Δa (Figur 3). Von daher ist es von Vorteil, wenn in der Verdrehsicherung der Zahnkranz 25 der Biegehilfe-Scheibe 13 und die damit zusammenwirkende Gegenkontur 27 des Klemmbackens 29 um den Axialversatz Δa zueinander verstellbar sind, wie es in der Figur 3 angedeutet ist.

In den Figuren 2 bis 6 sind weitere Verdrehsicherungen der Biegehilfe-Scheibe 13 angedeutet. In der Figur 2 weist die Biegehilfe-Scheibe 13 radial außen eine umlaufende Zylinderwand 33 auf, in der nach unten offene Langlöcher 35 eingearbeitet sind. In die Langlöcher 35 kann von radial außen ein werkzeugseitiger Bolzen als Gegenkontur 27 einragen.

Alternativ dazu weist die in der Figur 4 angedeutete Biegehilfe-Scheibe 13 am Außenumfang jeweils nach außen abragende Zähne auf, die mit einer entsprechenden werkzeugseitigen Gegenkontur 27 zusammenwirken. Alternativ dazu ist in der Figur 6 eine Biegehilfe-Scheibe 13 angedeutet, die als Verdrehsicherungskontur 25 umfangsseitig voneinander beabstandete Zahnlücken aufweist, in die eine werkzeugseitige Gegenkontur 27 (Finger) eingreift.

Anhand der Figur 9 wird ein Fügeprozesschritt beschrieben, bei dem der U-förmige Drahtbügel 6 mit seinen beiden Wickelstäben 5 in einer axial ausgerichteten Fügerichtung F in die Stator-Axialnuten 3 eingeschoben ist, und zwar mit Hilfe eines angedeuteten Zuführ-Werkzeugs 37, das den Bügelsteg 7 des Drahtbügels 6 mit einer Fügekraft F_{F} unter Zwischenlage der unteren Scheibe 17 in Anschlag mit der unteren Stator-Stirnseite 15 bringt.

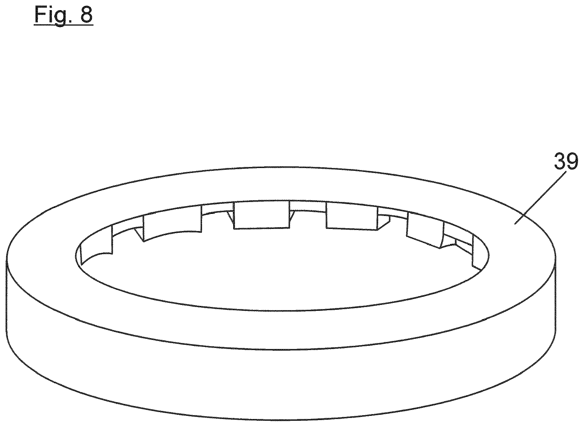

Im weiteren Verlauf wird der eingeschobene Drahtbügel 6 zusammen mit dem Blechpaket mit der Fügekraft F_{F} (vom Zuführ-Werkzeug 37 ausgeübt) gegen einen werkzeugseitigen Axialanschlag 39 gedrückt, und zwar unter zumindest teilweisem Aufbau der Blechpaket-Vorspannkraft Fv (Figur 1a). Der werkzeugseitige Axialanschlag 39 ist in der Figur 9 ein Verspannring, der in der Figur 8 in Alleinstellung gezeigt ist. In der Figur 9 wird also die Biegehilfe-Scheibe 13 unter Zwischenlage des Verspannrings 39 gegen einen Werkzeug-Anschlag 40 gedrückt. Anschließend erfolgt der Biegeprozessschritt, in dem der bereits erwähnten Axialpressverband gebildet wird.

In der Figur 10 erfolgt der Fügeprozessschritt, wie in der Figur 9 beschrieben. Im Unterschied zur Figur 9 wird in der Figur 10 das Zuführ-Werkzeug 37 bis in Anschlag mit dem Werkzeugträger 31 verstellt. Zum Aufbau der Blechpaket-Vorspannkraft Fv können die Werkzeug-Anschläge 40 über Stellschrauben in Axialrichtung höhenverstellt werden, wodurch die Blechpaket-Vorspannkraft Fv einstellbar ist.

In der Figur 11 und 12 ist dem Stator ein Werkzeugträger 31 zugeordnet, der an den axial gegenüberliegenden Stator-Stirnseiten 11, 15 jeweils zumindest einen Klemmbacken 29, 41 aufweist. In der Figur 12 ist der Stator mit seinem Blechpaket 1 unter zumindest teilweisem Aufbau der Blechpaket-Vorspannkraft Fv (Figur 1a) zwischen den beiden Klemmbacken 29, 41 festgeklemmt. Die Vorspannkraft Fv kann ebenfalls durch Stellschrauben 42 (Figur 12) variiert werden, mittels denen ein Axialabstand zwischen den Klemmbacken 29, 41 änderbar ist.

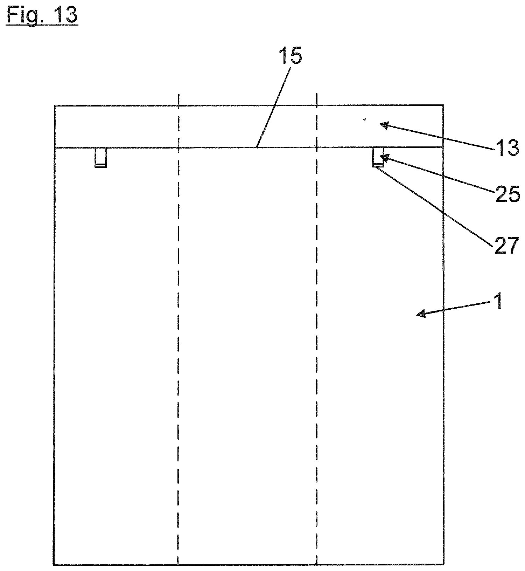

In der Figur 13 ist eine Verdrehsicherung der Biegehilfe-Scheibe 13 gemäß einem weiteren Ausführungsbeispiel gezeigt. Demzufolge weist die Biegehilfe-scheibe 13 als Verdrehsicherungskontur 25 einen angeformten Bolzen auf, der in eine korrespondierende Vertiefung an der oberen axialen Stator-stirnseite 15 einragt.

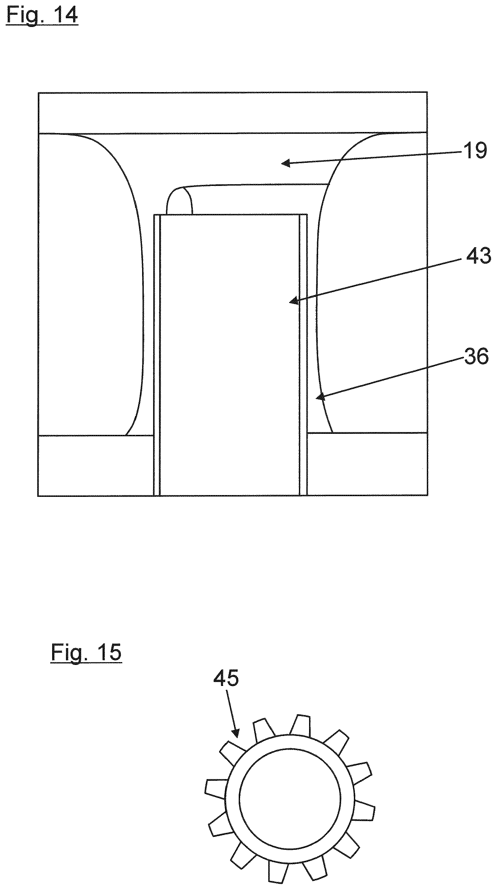

In der Figur 14 weist die Durchlassöffnung 19 der Biegehilfe-Scheibe 13 bzw. der zweiten Scheibe 17 an ihren Öffnungsrändern eine konusartige Ausweitung 36 auf, wodurch eine Einführhilfe für die Wickelstäbe 5 und/oder für eine Nutgrundisolation 43 bereitgestellt ist. Die Nutgrundisolation 43 wird vor dem Hairpin-Fügeprozess in die jeweilige Axialnut 3 des Stators lose eingelegt. Im nachgeschalteten Fügeprozesschritt wird dann der jeweilige Wickelstab 5 in die Stator-Axialnut 3 in der Fügerichtung F eingeschoben.

Zur Lagefixierung der Nutgrundisolation 43 während des Hairpin-Fügeprozessschrittes ist in der Figur 15 zusätzlich ein Sperrelement 45 bereitstellbar. Das Sperrelement 45 weist in der Figur 12 eine Zahnradgeometrie (das heißt Sperrverzahnung) auf, mittels der an der zur Fügerichtung F abgewandten Statorseite eine Verlagerung der Nutgrundisolation 43 in der Fügerichtung F verhindert wird. Von daher kann mittels des Sperrelements 45 ein Nutgrundisolations-Austritt aus den Axialnuten 3 während des Hairpin-Fügeprozessschritts verhindert werden.

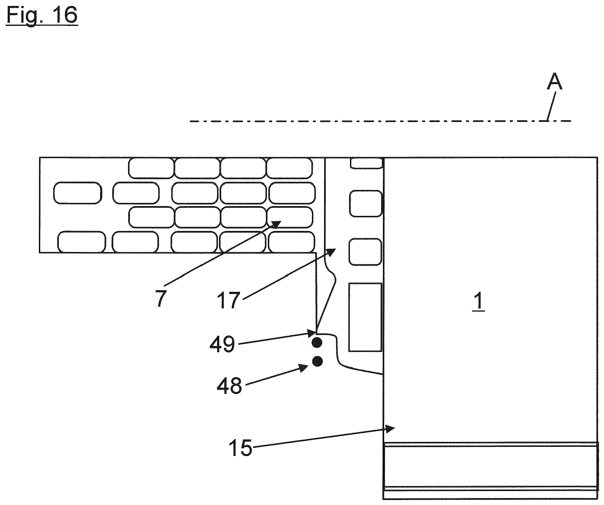

Anhand der Figur 16 ist ein, dem Biegeprozessschritt nachgeschalteter Imprägnierprozessschritt angedeutet. Im Imprägnierprozessschritt werden die Wickelstäbe 5, die Axialnuten 3 sowie der Wickelkopf (Bügelsteg 7) in einem sogenannten Träufelprozess mittels eines Träufeldüse zielgerichtet mit einer flüssigen Harz-Ausgangskomponente beaufschlagt. Im Träufelprozess dreht der Stator um seine horizontal ausgerichtete Stator-Achse A, wodurch die flüssige Harz-Ausgangskomponente 48 vom dargestellten Hairpin-Wickelkopf über die Scheibe 17 unter Zentrifugalkraft-Einwirkung nach radial außen abfließt. Die Scheibe 17 weist in der Figur 16 eine umlaufende Abtropfkante 49 auf, an der die nach radial außen strömende Harz-Ausgangskomponente abtropfen kann, ohne in Kontakt mit der Blechpaket-Stirnseite 15 zu treten.

### BEZUGSZEICHENLISTE:

- 1: Blechpaket
- 3: Axialnuten
- 6: U-förmiger Drahtbügel
- 5: Bügelschenkel
- 7: Bügelsteg
- 9: Stabenden
- 11: axiale Stator-Stirnseite
- 13: Biegehilfe-Scheibe
- 15: untere axiale Stator-Stirnseite
- 17: zweite Scheibe
- 19: Durchlassöffnung
- 21: Öffnungsrand
- 23: Dichtungswand
- 25: Zahnkranz (Verdrehsicherungskontur)
- 26: Ölkanäle
- 27: Gegenkontur
- 29: oberer Klemmbacken
- 31: Werkzeugträger
- 33: Zylinderwand
- 35: Langlöcher
- 36: konusartige Ausweitung
- 37: Hubkolben
- 39: Spannring
- 40: Werkzeug-Anschlag
- 41: Klemmbacken unten
- 42: Stellschrauben
- 43: Nutgrundisolation
- 45: Sperrelement
- 47: Träufeldüse
- 48: Harz-Ausgangskomponente
- 49: Abtropfkante
- F: Fügerichtung
- F_{V}: Vorspannkraft
- F_{T}: tangentiale Kraftkomponente
- F_{A}: axiale Kraftkomponente
- F_{F}: Fügekraft
- I: Statorpaket-Länge
- Δa: Axialversatz
- α: Verschränkungswinkel
- S: Stator-Achse

## Patentansprüche

1. Stator für eine Elektromaschine, mit Axialnuten (3), in denen in einem Fügeprozessschritt elektrisch leitfähige Wickelstäbe (5) abgelegen sind, die mit ihren Stabenden (9) von zumindest einer axialen Stirnseite (11) des Stators abragen, wobei die Stabenden (9) in einem Biegeprozessschritt um einen Verschränkungswinkel (α) in Kontaktpositionen gebogen sind, in denen die Stabenden (9) in einem Verschaltungsprozessschritt elektrisch verschaltet sind, wobei als Biegehilfe im Biegeprozessschritt eine Biegehilfe-Scheibe (13) mit Durchlassöffnungen (19) bereitgestellt ist, durch die die Stabenden (9) geführt sind, und wobei ein Öffnungsrand (21) der jeweiligen Scheiben-Durchlassöffnung (19) als Biegekante wirkt, um die das jeweilige Stabende (9) im Biegeprozessschritt bis in seine Kontaktposition gebogen ist, wobei im Fügeprozessschritt und im Biegeprozessschritt dem Stator ein Werkzeugträger (31) zugeordnet ist, und dass der Werkzeugträger (31) an den axial gegenüberliegenden Stirnseiten (11, 15) des Stators jeweils zumindest einen Klemmbacken (29, 41) aufweist, und dass der Stator mit seinem Blechpaket (1) unter zumindest teilweisem Aufbau der Blechpaket-Vorspannkraft (Fv) zwischen den beiden Klemmbacken (29, 41) geklemmt ist.

2. Stator nach Anspruch 1, **dadurch gekennzeichnet, dass** im Biegevorgang die Stabenden (9) mit einer in Umfangsrichtung wirkenden, tangentialen Biegekraftkomponente (F_{T}) auf die Biegehilfe-Scheibe (13) einwirken, und dass der Biegehilfe-Scheibe (13) eine Verdrehsicherung zugeordnet ist, mittels der die Biegehilfe-Scheibe (13) drehfest am Stator angeordnet bleibt, und dass die Verdrehsicherung aus einer an der Biegehilfe-Scheibe (13) ausgebildeten Verdrehsicherungskontur (25) und einer damit zusammenwirkenden Gegenkontur (27) aufgebaut ist.

3. Stator nach Anspruch 1 oder 2, **dadurch gekennzeichnet, dass** die Wickelstäbe (5) jeweils Bügelschenkel eines U-förmigen Drahtbügels (6) sind, die mit einem Bügelsteg (7) miteinander verbunden sind, und dass die Drahtbügel (6) im Fügeprozessschritt in einer axial ausgerichteten Fügerichtung (F) in die Stator-Axialnuten (3) eingeschoben sind, und dass der Bügelsteg (7) des Drahtbügels (6) mit einer Fügekraft (F_{F}) in mittelbaren oder unmittelbaren Anschlag mit der zugewandten axialen Stator-Stirnseite (15) kommt.

4. Stator nach einem der Ansprüche 1 bis 3, **dadurch gekennzeichnet, dass** der Stator aus einem Blechpaket (1) mit in axialer Stapelrichtung angeordneten Blechlagen aufgebaut ist, und dass nach erfolgtem Biegeprozessschritt das Blechpaket (1) des Stators mit einer Vorspannkraft (Fv) zwischen den verschränkten Stabenden (9) und den Bügelstegen (7) der Drahtbügel (6) eingespannt ist, und zwar unter Bildung eines Axialpressverbands, bei dem die Biegehilfe-Scheibe (13), das Blechpaket (1) und eine auf der axial gegenüberliegenden Stator-Stirnseite (15) positionierte zweite Scheibe (17) zwischen den verschränkten Stabenden (9) und den Bügelstegen (7) der Drahtbügel (6) eingespannt sind.

5. Stator nach einem der vorhergehenden Ansprüche, **dadurch gekennzeichnet, dass** im Biegevorgang die Stabenden (9) in Axialrichtung mit einer axialen Biegekraftkomponente (F_{A}) auf die Biegehilfe-Scheibe (13) einwirken, und zwar unter zumindest teilweisem Aufbau der Blechpaket-Vorspannkraft (Fv) und/oder unter Reduzierung der Blechpaket-Axiallänge (I) um einen Axialversatz (Δa), und dass die Verdrehsicherungskontur (25) der Biegehilfe-Scheibe (13) und die damit zusammenwirkende Gegenkontur (27) um den Axialversatz (Δa) zueinander verstellbar sind.

6. Stator nach Anspruch 3, 4 oder 5, **dadurch gekennzeichnet, dass** im Fügeprozessschritt die in die Stator-Axialnuten (3) eingeschobenen Drahtbügel (6) mit der Fügekraft (F_{F}) sowie unter Zwischenlage des Blechpakets (1) und der Biegehilfe-Scheibe (13) gegen einen werkzeugseitigen Axialanschlag (39) drücken, und zwar unter zumindest teilweisem Aufbau der Blechpaket-Vorspannkraft (Fv), und dass anschließend der Biegeprozessschritt erfolgt, und zwar unter Bildung des Axialpressverbands.

7. Stator nach einem der vorhergehenden Ansprüche, **dadurch gekennzeichnet, dass** zumindest der auf der Seite der Stabenden (9) angeordnete Klemmbacken (29, 41) die Gegenkontur (27) aufweist, die mit der Verdrehsicherungskontur (25) der Biegehilfe-Scheibe (13) zusammenwirkt.

8. Stator nach einem der Ansprüche 4 bis 7, **dadurch gekennzeichnet, dass** die jeweilige Durchlassöffnung (19) der Biegehilfe-Scheibe (13) und/oder der zweiten Scheibe (17) zumindest an ihrem, der Fügerichtung (F) zugewandten Öffnungsrand (21) eine konusartige Ausweitung (36) aufweist zur Bereitstellung einer Einführhilfe für die Wickelstäbe (5) und/oder für eine Nutgrundisolation (43).

9. Stator nach einem der vorhergehenden Ansprüche, **dadurch gekennzeichnet, dass** vor dem Fügeprozessschritt eine Nutgrundisolation (43) in die jeweilige Axialnut (3) des Stators lose eingelegt ist, und dass im nachgeschaltetem Fügeprozessschritt ein Wickelstab (5) in die Stator-Axialnut (3) in der Fügerichtung (F) eingeschoben ist, und dass zur Lagefixierung der Nutgrundisolation (43) während des Fügeprozessschritts ein Sperrelement (45) bereitgestellt ist, das an der zur Fügerichtung (F) abgewandten Statorseite (11) angeordnet ist und eine Verlagerung der Nutgrundisolation (43) in der Fügerichtung (F) verhindert.

10. Stator nach einem der vorhergehenden Ansprüche, **dadurch gekennzeichnet, dass** in einem den Biegeprozessschritt nachgeschalteten Imprägnierprozessschritt der Stator, und zwar die Wickelstäbe (5) und/oder die Axialnuten (3) und/oder ein Wickelkopf, in einem Träufelprozess mittels einer Träufeldüse (47) zielgerichtet eine flüssige Harz-Ausgangskomponente (48) aufgetragen wird, und dass im Träufelprozess der Stator um seine horizontal ausgerichtete Stator-Achse dreht, wodurch die flüssige Harz-Ausgangskomponente (48) von den Stabenden (9) oder vom Wickelkopf über die jeweilige Scheibe (13, 17) unter Zentrifugalkraft-Einwirkung nach radial außen strömt, und dass die Scheibe (13, 17) eine umlaufende Abtropfkante (49) aufweist, an der die nach radial außen strömende Harz-Ausgangskomponente (48) abtropft, ohne in Kontakt mit dem Blechpaket (19) zu treten.

11. Verfahren zur Herstellung eines Stators nach einem der vorhergehenden Ansprüche.

## Claims

1. Stator for an electric machine, the stator having axial grooves (3) in which electrically conductive winding bars (5) are deposited in a joining process step,
bar ends (9) of which winding bars protrude from at least one axial end face (11) of the stator, wherein the bar ends (9) are bent, in a bending process step, through a crossing angle (α) into contact positions in which the bar ends (9) can be electrically interconnected in an interconnecting process step, wherein a bending aid disk (13) having through-openings (19), through which the bar ends (9) are guided, is provided as a bending aid in the bending process step, and wherein an opening edge (21) of each disk through-opening (19) acts as a bending edge around which the bar end (9) in question can be bent into its contact position in the bending process step, wherein a tool carrier (31) is associated with the stator in the joining process step and in the bending process step, and in that the tool carrier (31) has at least one clamping jaw (29, 41) on each of the axially opposite end faces (11, 15) of the stator, and in that the stator together with its laminated core (1) is clamped between the two clamping jaws (29, 41) with at least partial build-up of the laminated core pre-tensioning force (Fv).

2. Stator according to claim 1, **characterised in that** in the bending process the bar ends (9) act on the bending aid disk (13) with a tangential bending force component (FT) acting in the circumferential direction, and **in that** the bending aid disk (13) is associated with an anti-rotation mechanism by means of which the bending aid disk (13) remains arranged on the stator in a rotationally fixed manner, and **in that** the anti-rotation mechanism is constructed from an anti-rotation contour (25) formed on the bending aid disk (13) and a counter-contour (27) interacting therewith.

3. Stator according to claim 1 or 2, **characterised in that** the winding bars (5) are each bracket limbs of a U-shaped wire bracket (6) which are interconnected by a bracket web (7), and **in that** the wire brackets (6) are inserted into the stator axial grooves (3) in the joining process step in an axially aligned joining direction (F), and **in that** the bracket web (7) of the wire bracket (6) comes into indirect or direct abutment with the facing axial stator end face (15) by means of a joining force (F_{F}).

4. Stator according to any one of claims 1 to 3, **characterised in that** the stator is constructed from a laminated core (1) with laminated layers arranged in the axial stacking direction, and **in that**, after the bending process step has been carried out, the laminated core (1) of the stator is clamped with a pre-tensioning force (Fᵥ) between the crossed bar ends (9) and the bracket webs (7) of the wire brackets (6), namely forming an axial interference fit in which the bending aid disk (13), the laminated core (1) and a second disk (17) positioned on the axially opposite stator end face (15) are clamped between the crossed bar ends (9) and the bracket webs (7) of the wire brackets (6).

5. Stator according to any one of the preceding claims, **characterised in that** in the bending process, the bar ends (9) act in the axial direction with an axial bending force component (F_{A}) on the bending aid disk (13), thereby at least partially building up the laminated core pre-tensioning force (Fᵥ) and/or reducing the laminated core axial length (I) by an axial offset (Δa), and **in that** the anti-rotation contour (25) of the bending aid disk (13) and the counter-contour (27) interacting therewith are adjustable relative to one another by the axial offset (Δa).

6. Stator according to claim 3, 4 or 5, **characterised in that** in the joining process step the wire brackets (6) inserted into the stator axial grooves (3) press against an axial stop (39) on the tool side with the joining force (F_{F}) and with the laminated core (1) and the bending aid disk (13) being interposed, thereby at least partially building up the laminated core pre-tensioning force (Fᵥ), and that subsequently the bending process step takes place, thereby forming the axial interference fit.

7. Stator according to any one of the preceding claims, **characterised in that** at least the clamping jaw (29, 41) arranged on the side of the bar ends (9) has the counter-contour (27) which interacts with the anti-rotation contour (25) of the bending aid disk (13).

8. Stator according to any one of claims 4 to 7, **characterised in that** the respective through-opening (19) of the bending aid disk (13) and/or of the second disk (17) has, at least at its opening edge (21) facing the joining direction (F), a cone-like widening (36) for providing an insertion aid for the winding bars (5) and/or for a slot base insulation (43).

9. Stator according to any one of the preceding claims, **characterised in that** prior to the joining process step a groove base insulation (43) is loosely inserted into the respective axial groove (3) of the stator, and **in that** in the downstream joining process step a winding bar (5) is inserted into the stator axial groove (3) in the joining direction (F), and **in that**, in order to fix the position of the groove base insulation (43) during the joining process step, a blocking element (45) is provided which is arranged on the stator side (11) facing away from the joining direction (F) and prevents the groove base insulation (43) from being displaced in the joining direction (F).

10. Stator according to any one of the preceding claims, **characterised in that** in an impregnation process step downstream of the bending process step, the stator, namely the winding bars (5) and/or the axial grooves (3) and/or a winding head, is given a targeted application of a liquid resin starting component (48) in a trickling process by means of a trickling nozzle (47), and **in that** in the trickling process the stator rotates about its horizontally aligned stator axis, whereby the liquid resin starting component (48) flows radially outwards from the bar ends (9) or from the winding head via the respective disk (13, 17) under the effect of centrifugal force, and **in that** the disk (13, 17) has a circumferential drip edge (49) from which the resin starting component (48) flowing radially outwards drips without coming into contact with the laminated core (19).

11. Method of producing a stator according to any one of the preceding claims.

## Revendications

1. Stator pour une machine électrique, avec des rainures axiales (3) dans lesquelles, dans une étape de processus d'assemblage, des barres d'enroulement (5) électroconductrices sont déposées,
qui dépassent avec leurs extrémités de barre (9) d'au moins une face frontale axiale (11) du stator, dans lequel les extrémités de barre (9) sont pliées dans une étape de processus de pliage d'un angle d'entrelacement (α) dans des positions de contact dans lesquelles les extrémités de barre (9) sont connectées électriquement dans une étape de processus de connexion, dans lequel un disque d'aide au pliage (13) avec des ouvertures de passage (19), à travers lesquelles les extrémités de barre (9) sont guidées, est mis à disposition en tant qu'aide au pliage dans l'étape de processus de pliage, et dans lequel un bord d'ouverture (21) de l'ouverture de passage de disques (19) respective agit en tant qu'arête de pliage, autour de laquelle l'extrémité de barre (9) respective est pliée dans l'étape de processus de pliage jusqu'à sa position de contact, dans lequel un porte-outil (31) est associé au stator dans l'étape de processus d'assemblage et dans l'étape de processus de pliage, et en ce que le porte-outil (31) présente au moins une mâchoire de serrage (29, 41) sur les faces frontales (11, 15) axialement opposées du stator, et en ce que le stator est serré avec son paquet de tôles (1) entre les deux mâchoires de serrage (29, 41) en développant au moins partiellement la force de précontrainte de paquet de tôles (Fv).

2. Stator selon la revendication 1, **caractérisé en ce que**, lors du processus de pliage, les extrémités de barre (9) agissent sur le disque d'aide au pliage (13) avec une composante de force de pliage tangentielle (FT) agissant dans la direction périphérique, et **en ce qu'**une sécurité antirotation est associée au disque d'aide au pliage (13), au moyen de laquelle le disque d'aide au pliage (13) reste disposé sur le stator de manière non rotative, et **en ce que** la sécurité antirotation est constituée d'un contour de sécurité antirotation (25) formé sur le disque d'aide au pliage (13) et d'un contre-contour (27) coopérant avec celui-ci.

3. Stator selon la revendication 1 ou 2, **caractérisé en ce que** les barres d'enroulement (5) sont respectivement des branches d'étrier d'un étrier métallique (6) en forme de U, qui sont connectées entre elles par une entretoise d'étrier (7), et **en ce que** les étriers métalliques (6) sont insérés dans les rainures axiales (3) du stator dans une direction d'assemblage (F) orientée axialement lors de l'étape de processus d'assemblage, et **en ce que** l'entretoise d'étrier (7) de l'étrier métallique (6) vient en butée directe ou indirecte avec la face frontale axiale de stator (15) lui faisant face avec une force d'assemblage (F_{F}).

4. Stator selon l'une quelconque des revendications 1 à 3, **caractérisé en ce que** le stator est constitué d'un paquet de tôles (1) avec des couches de tôles disposées dans la direction d'empilement axiale, et **en ce qu'**après la réalisation de l'étape de processus de pliage, le paquet de tôles (1) du stator est serré avec une force de précontrainte (Fᵥ) entre les extrémités de barre (9) entrelacées et les entretoises d'étrier (7) des étriers métalliques (6), et ce, en formant une liaison par pression axiale, dans laquelle le disque d'aide au pliage (13), le paquet de tôles (1) et un second disque (17) positionné sur la face frontale de stator (15) axialement opposée sont serrés entre les extrémités de barre (9) entrelacées et les entretoises d'étrier (7) des étriers métalliques (6).

5. Stator selon l'une quelconque des revendications précédentes, **caractérisé en ce que,** lors du processus de pliage, les extrémités de barre (9) agissent dans la direction axiale avec une composante de force de pliage axiale (F_{A}) sur le disque d'aide au pliage (13), et ce, en développant au moins partiellement la force de précontrainte de paquet de tôles (Fᵥ) et/ou en réduisant la longueur axiale de paquet de tôles (I) d'un décalage axial (Δa), et **en ce que** le contour de sécurité antirotation (25) du disque d'aide au pliage (13) et le contre-contour (27) coopérant avec celui-ci sont réglables l'un par rapport à l'autre autour du décalage
axial (Aa).

6. Stator selon la revendication 3, 4 ou 5, **caractérisé en ce que,** dans l'étape de processus d'assemblage, les étriers métalliques (6) insérés dans les rainures axiales de stator (3) sont pressés contre une butée axiale (39) côté outil avec la force d'assemblage (F_{F}) ainsi qu'avec interposition du paquet de tôles (1) et du disque d'aide au pliage (13), et ce, en développant au moins partiellement la force de précontrainte de paquet de tôles (Fᵥ), et **en ce que** l'étape de processus de pliage a ensuite lieu, et ce, en formant la liaison par pression axiale.

7. Stator selon l'une quelconque des revendications précédentes, **caractérisé en ce qu'**au moins la mâchoire (29, 41) disposée du côté des extrémités de barre (9) présente le contre-contour (27) qui coopère avec le contour de sécurité antirotation (25) du disque d'aide au pliage (13).

8. Stator selon l'une quelconque des revendications 4 à 7, **caractérisé en ce que** l'ouverture de passage (19) respective du disque d'aide au pliage (13) et/ou du second disque (17) présente, au moins sur son bord d'ouverture (21) tourné vers la direction d'assemblage (F), un élargissement (36) en forme de cône pour fournir une aide à l'introduction pour les barres d'enroulement (5) et/ou pour une isolation de fond de rainure (43).

9. Stator selon l'une quelconque des revendications précédentes, **caractérisé en ce qu'**avant l'étape de processus d'assemblage, une isolation de fond de rainure (43) est insérée de manière lâche dans la rainure axiale respective (3) du stator, et **en ce que** dans l'étape de processus d'assemblage en aval, une barre d'enroulement (5) est insérée dans la rainure axiale de stator (3) dans la direction d'assemblage (F) et **en ce que**, pour fixer la position de l'isolation de fond de rainure (43) pendant l'étape de processus d'assemblage, un élément de blocage (45) est prévu, qui est disposé sur le côté stator (11) opposé à la direction d'assemblage (F) et empêche un déplacement de l'isolation de fond de rainure (43) dans la direction d'assemblage (F).

10. Stator selon l'une quelconque des revendications précédentes, **caractérisé en ce que,** dans une étape de processus d'imprégnation en aval de l'étape de processus de pliage, le stator, et plus précisément les barres d'enroulement (5) et/ou les rainures axiales (3) et/ou une tête d'enroulement, une composante de départ de résine liquide (48) est appliquée de manière ciblée dans un processus de ruissellement au moyen d'une buse de ruissellement (47), et **en ce que**, dans le processus de ruissellement, le stator tourne autour de son axe de stator orienté horizontalement, moyennant quoi la composante de sortie de résine liquide (48) s'écoule radialement vers l'extérieur depuis les extrémités de barre (9) ou depuis la tête d'enroulement sur le disque respectif (13, 17) sous l'effet de la force centrifuge, et **en ce que** le disque (13, 17) présente un bord d'égouttage périphérique (49) sur lequel la composante de sortie de résine (48) s'écoulant radialement vers l'extérieur s'égoutte sans entrer en contact avec le paquet de tôles (19).

11. Procédé de fabrication d'un stator selon l'une quelconque des revendications précédentes.
